# EUROPEAN PATENT APPLICATION

(11) **EP 4 661 105 A1**
(43) Date of publication of application: **10.12.2025**
(21) Application number: 24750004.4
(22) Date of filing: 22.01.2024
(51) Int. Cl.: H01M 4/525, C01G 53/00, H01M 4/505

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(30) Priority: 31.01.2023 JP 2023013447
(71) Applicant: Panasonic Intellectual Property Management Co., Ltd., Kadoma-shi, Osaka 571-0057 (JP)
(72) Inventor: KAWADA, Hiroshi, Kadoma-shi, Osaka 571-0057 (JP); ESAKI, Shogo, Kadoma-shi, Osaka 571-0057 (JP); KUROSAWA, Takako, Kadoma-shi, Osaka 571-0057 (JP)
(74) Representative: Novagraaf International SA
(86) International application number: PCT/JP2024/001563
(87) International publication number: WO 2024/162051

(57) **Abstract**

A positive electrode active material for nonaqueous electrolyte secondary batteries according to one embodiment of the present disclosure has a crystal structure belonging to the space group R-3m, and is characterized by being composed of secondary particles in each of which primary particles aggregate. This positive electrode active material for nonaqueous electrolyte secondary batteries is also characterized in that: the secondary particles each comprise voids; with respect to a particle cross-section of each secondary particle, the ratio of the area of the voids to the area of the particle cross-section is 15% or less; and the average of the aspect ratios of the voids is 2.1 or more. A positive electrode active material according to the present disclosure enables a nonaqueous electrolyte secondary battery to have a higher capacity.

## Description

### TECHNICAL FIELD

The present disclosure relates to a positive electrode active material for a non-aqueous electrolyte secondary battery and a non-aqueous electrolyte secondary battery using this positive electrode active material.

### BACKGROUND ART

In non-aqueous electrolyte secondary batteries such as lithium-ion secondary batteries, many studies have been made on a positive electrode active material since the positive electrode active material has a significant influence on battery performance such as input/output characteristics, capacity, and durability. For the positive electrode active material, a lithium-transition metal composite oxide containing a transition metal element such as Ni, Mn or Co is generally used. The type and added amounts of elements contained in the lithium-transition metal composite oxide, the crystal structure and the particle structure of the composite oxide, and the like significantly affect the battery performance, and even a slight change in these physical properties may fail to achieve the desired performance.

For example, Patent Literatures 1 and 2 focus on the particle structure of a positive electrode active material for the purpose of improving battery performance such as an increase in capacity. Patent Literature 1 discloses a positive electrode active material constituted by two types of positive electrode active materials, in which a second positive electrode active material is of particles having a hollow structure and voids in the particles with a predetermined length and aspect ratio. Patent Literature 2 discloses particles of a positive electrode active material having a hollow structure and a particle aspect ratio of greater than or equal to 1 and less than or equal to 1.33, the positive electrode active material including a predetermined amount of voids in the center of the particles.

### CITATION LIST

### PATENT LITERATURE

PATENT LITERATURE 1: Japanese Unexamined Patent Application Publication No. 2021-120937
PATENT LITERATURE 2: Japanese Unexamined Patent Application Publication No. 2019-110136

### SUMMARY

In recent years, non-aqueous electrolyte secondary batteries, such as lithium-ion secondary batteries, have been used as power sources for driving vehicles, and required to have even higher capacities. The positive electrode active materials of Patent Literatures 1 and 2 still have much room for improvement from the viewpoint of an increase in capacity.

A positive electrode active material for a non-aqueous electrolyte secondary battery in an aspect of the present disclosure is positive electrode active material for a non-aqueous electrolyte secondary battery having a crystal structure belonging to a space group R-3m, and being constituted by secondary particles each formed by aggregation of primary particles, wherein the secondary particles include voids, and in a particle cross-section of the secondary particles, a proportion of an area of the voids to an area of the particle cross-section is less than or equal to 15%, and the voids have an average aspect ratio of greater than or equal to 2.1.

A positive electrode active material for a non-aqueous electrolyte secondary battery in another aspect of the present disclosure is a positive electrode active material for a non-aqueous electrolyte secondary battery having a crystal structure belonging to a space group R-3m, and being constituted by secondary particles each formed by aggregation of primary particles, wherein the secondary particles include voids, the voids include first voids having an aspect ratio of greater than or equal to 6.0 and second voids having an aspect ratio of less than 6.0, and in a particle cross-section of the secondary particles, each void has an average area of less than or equal to 0.018 µm², and a proportion of an area of the first voids to an area of the particle cross-section is greater than or equal to 0.2%.

A non-aqueous electrolyte secondary battery according to the present disclosure comprises: a positive electrode including the above positive electrode active material; a negative electrode; and a non-aqueous electrolyte.

According to the positive electrode active material of the present disclosure, increase in capacity of the non-aqueous electrolyte secondary battery can be achieved.

### BRIEF DESCRIPTION OF DRAWING

FIG. 1 is a longitudinal sectional view of a non-aqueous electrolyte secondary battery of an example of an embodiment.
FIG. 2 is a particle sectional image of a positive electrode active material of Example 1.
FIG. 3 is a particle sectional image of a positive electrode active material of Example 2.
FIG. 4 is a particle sectional image of a positive electrode active material of Comparative Example 1.

### DESCRIPTION OF EMBODIMENTS

As a result of intensive studies aimed at increasing the capacity of a non-aqueous electrolyte secondary battery, the present inventors have found that the charge-discharge capacity of the battery significantly increases when voids having a high aspect ratio are introduced into particles in a positive electrode active material having a crystal structure belonging to the space group R-3m. Note that even if positive electrode active material particles have voids, the effect of improving the capacity is not obtained when the aspect ratio is low.

Although some techniques for forming voids in the particles of the positive electrode active material and controlling the aspect ratio thereof have been proposed (see, for example, Patent Literatures 1 and 2), these techniques are related to hollow particles having a high void ratio, causing a problem that the energy density of the battery is lowered when the positive electrode active material is used. The present inventors have succeeded in controlling the aspect ratio of voids in a region of low void ratio. According to the positive electrode active material of the present disclosure, the charge-discharge capacity of the non-aqueous electrolyte secondary battery can be significantly improved.

Hereinafter, an example of embodiments of the positive electrode active material for a non-aqueous electrolyte secondary battery according to the present disclosure and the non-aqueous electrolyte secondary battery using this positive electrode active material will be described in detail with reference to the drawings. The scope of the present disclosure includes configurations composed of selective combinations of constitutional elements of a plurality of embodiments and modified examples described below.

In the embodiment described below, a non-aqueous electrolyte secondary battery 10 being a cylindrical battery in which a wound electrode assembly 14 is housed in a bottomed cylindrical exterior housing can 16 will be exemplified, but the exterior body of the battery is not limited to the cylindrical exterior housing can. Examples of other embodiments of the non-aqueous electrolyte secondary battery according to the present disclosure include: a rectangular battery comprising a rectangular exterior housing can; a coin battery comprising a coin-shaped exterior housing can; and a pouch battery comprising an exterior body constituted with laminated sheets including a metal layer and a resin layer. The electrode assembly is not limited to the wound electrode assembly, and may be a stacked electrode assembly in which a plurality of positive electrodes and a plurality of negative electrodes are alternately stacked via a separator.

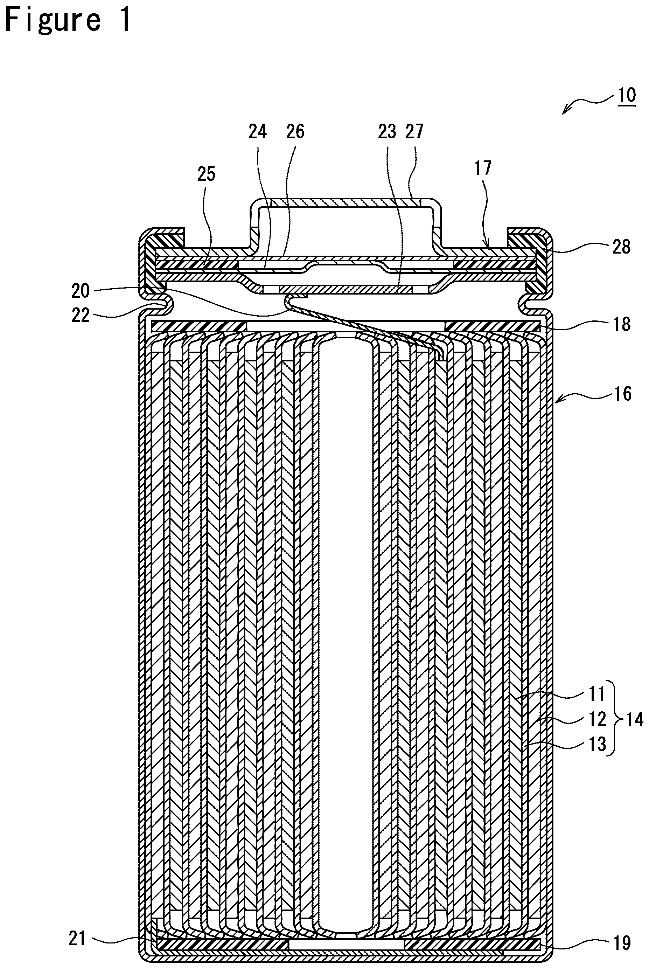

FIG. 1 is a sectional view of the non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The non-aqueous electrolyte secondary battery 10 is, for example, a lithium-ion secondary battery. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening portion on one end side in an axial direction, and the opening portion of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte has lithium-ion conductivity. The non-aqueous electrolyte may be a liquid electrolyte (an electrolyte liquid) or may be a solid electrolyte.

The liquid electrolyte (the electrolyte liquid) includes a non-aqueous solvent and an electrolyte salt dissolved in the non-aqueous solvent. For the non-aqueous solvent, esters, ethers, nitriles, amides, and a mixed solvent of greater than or equal to two thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

As the solid electrolyte, a solid or gel polymer electrolyte, an inorganic solid electrolyte, and the like may be used, for example. For the inorganic solid electrolyte, a known material for an all-solid lithium-ion secondary battery or the like (for example, an oxide-type solid electrolyte, a sulfide-type solid electrolyte, a halogen-type solid electrolyte, and the like) may be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening portion of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13, which constitute the electrode assembly 14, specifically the positive electrode 11, will be described in detail.

### [Positive Electrode]

The positive electrode 11 has a positive electrode core and a positive electrode mixture layer disposed on the positive electrode core. For the positive electrode core, a foil of a metal stable within a potential range of the positive electrode 11, such as aluminum, an aluminum alloy, stainless steel, and titanium, a film in which such a metal is disposed on a surface layer thereof, and the like may be used. The positive electrode mixture layer includes a positive electrode active material, a conductive agent, and a binder, and is preferably provided on both surfaces of the positive electrode core. The positive electrode 11 may be produced by, for example, applying a positive electrode mixture slurry including the positive electrode active material, the conductive agent, and the binder on the positive electrode core, and drying and subsequently compressing the coating film to form the positive electrode mixture layer on both the surfaces of the positive electrode core.

Examples of the conductive agent included in the positive electrode mixture layer may include carbon black such as acetylene black and Ketjenblack, graphite, carbon nanotube (CNT), carbon nanofiber, graphene, metal fiber, metal powder, and conductive whisker. The conductive agents may be used singly, or in combination thereof. A content rate of the conductive agent is greater than or equal to 0.1 mass% and less than or equal to 5 mass% relative to a mass of the positive electrode mixture layer, for example.

Examples of the binder included in the positive electrode mixture layer include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), or the like. The binders may be used singly, or in combination thereof. A content rate of the binder is greater than or equal to 0.1 mass% and less than or equal to 5 mass% relative to the mass of the positive electrode mixture layer, for example.

The positive electrode active material has a layered rock-salt structure belonging to the space group R-3m and is constituted by secondary particles formed by aggregation of primary particles. The secondary particles have voids. The voids include first voids having an aspect ratio of greater than or equal to 6.0 and second voids having an aspect ratio of less than 6.0. The aspect ratio of a void is the ratio of the major diameter of the void to the minor diameter of the void (major diameter/minor diameter). Herein, a void having an aspect ratio of greater than or equal to 6.0 is defined as a "first void", and a void having an aspect ratio of less than 6.0 is defined as a "second void".

In the particle cross-section of the secondary particles of the positive electrode active material as an example of the embodiment, the proportion of an area of the voids to an area of the particle cross-section (sometimes referred to as "void ratio") is less than or equal to 15%, and the voids have an average aspect ratio of greater than or equal to 2.1. In the particle cross-section of the secondary particles of the positive electrode active material as another example of the embodiment, each void has an average area of less than or equal to 0.018 µm², and the proportion of an area of the first voids to an area of the particle cross-section is greater than or equal to 0.2%. That is, the positive electrode active material is not of hollow particles in which a large void is formed in the center of the particles but of particles having a low void ratio in which a large number of elongated voids are formed over a wide range of the entire particles.

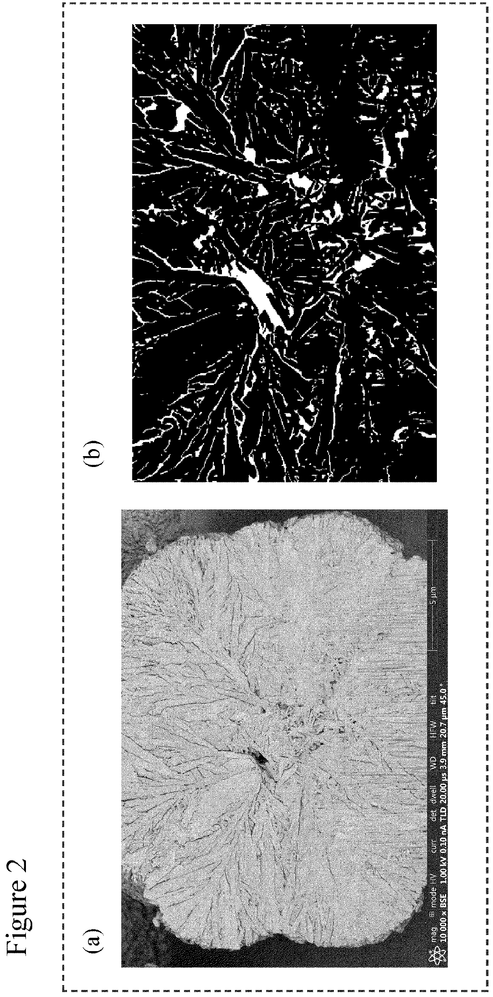

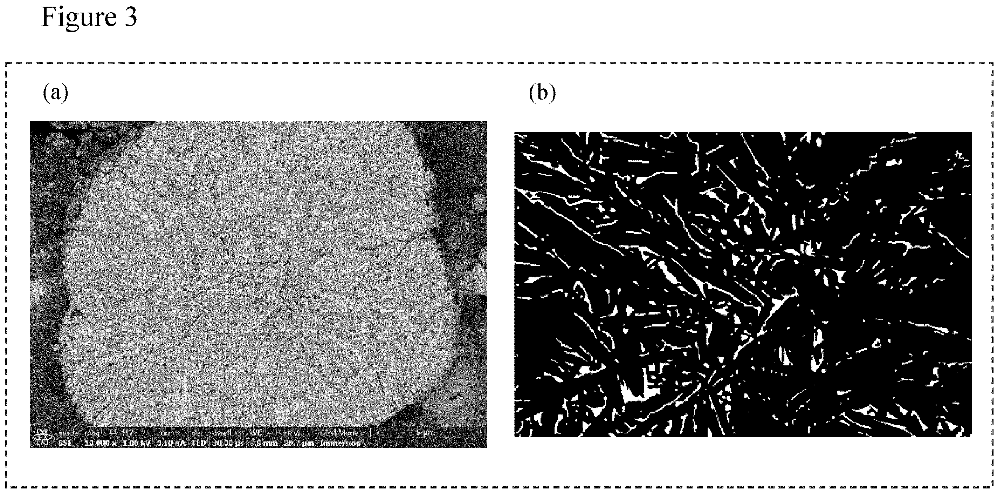

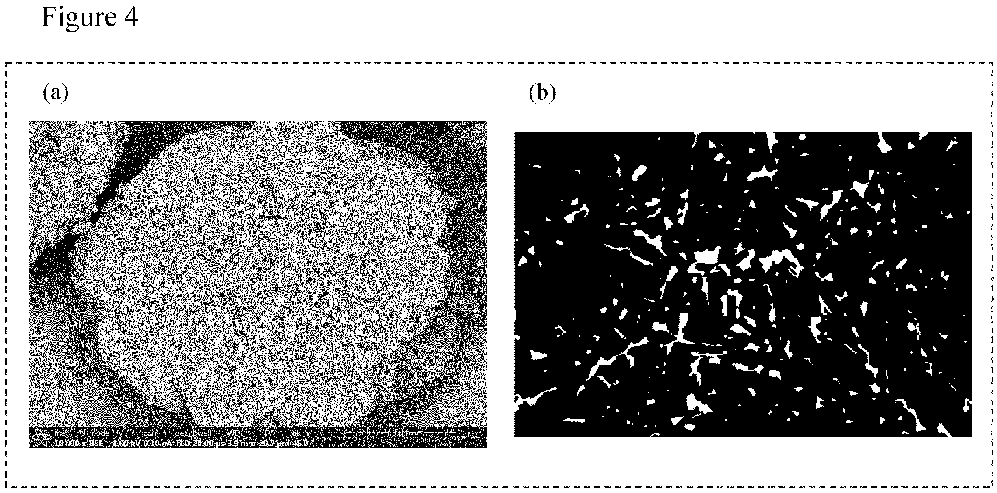

FIG. 2 and FIG. 3 are particle sectional images of the positive electrode active material produced in Examples described below. For comparison, FIG. 4 shows a particle sectional image of the positive electrode active material produced in Comparative Examples described below. (a) in each figure is a scanning electron microscope (SEM) image of a particle cross-section, and (b) in each figure is a binarized image in which a void portion is white and a portion having no voids is black by image processing. The positive electrode active material of the present embodiment is found to have a large number of thin line-shaped or streak-shaped voids formed evenly throughout the particles as compared with a conventional positive electrode active material. The positive electrode active material of the present embodiment has such voids, which is considered to allow an electrolyte liquid to penetrate smoothly into the particles, thus greatly contributing to an increase in the capacity of the battery.

The positive electrode active material contains, as a main component, a composite oxide (hereinafter referred to as a "Li composite oxide") having the voids formed in the secondary particles, where the main component means a component having the highest mass proportion among constituent components of the positive electrode active material. In a mixture layer of the positive electrode 11, a composite oxide other than the Li composite oxide may be used in combination as the positive electrode active material, and the content of the Li composite oxide is preferably greater than or equal to 50 mass%, and may be substantially 100 mass%.

The Li composite oxide is a composite oxide having a crystal structure belonging to the space group R-3m and containing at least one selected from the group consisting of Ni, Co, Mn, and Al. The Li composite oxide preferably contains at least Ni, and more preferably contains Ni and Mn from the viewpoint of achieving both increase in the capacity and material cost reduction. The content rate of Ni is preferably greater than or equal to 35 mol% and less than or equal to 85 mol%, more preferably greater than or equal to 40 mol% and less than or equal to 75 mol%, and may be greater than or equal to 40 mol% and less than or equal to 60 mol% relative to a total amount of moles of the metal elements excluding Li.

The Li composite oxide is a composite oxide represented by a compositional formula (Li₁₋ₓNaₓ)ₐM_{b}X_{1-b}O_{c}, wherein M represents at least one selected from the group consisting of Ni, Co, Mn, and Al; X represents at least one selected from the group consisting of transition metal elements and main-group elements other than Li, Na, Ni, Co, Mn, and Al; 0 ≤ x ≤ 0.2, 0.90 ≤ a ≤ 1.15, and 0 < b ≤ 1 are satisfied; and c is a value satisfying electroneutrality. As described above, M preferably includes at least Ni and Mn. The composition of the positive electrode active material can be measured using an ICP optical emission spectrometer (for example, iCAP6300, manufactured by Thermo Fisher Scientific Inc.).

In the compositional formula (Li₁₋ₓNaₓ)ₐM_{b}X_{1-b}O_{c}, a total mole ratio (a) of Li and Na is preferably greater than or equal to 0.80 and less than or equal to 1.15 (0.80 ≤ a ≤ 1.15), and may be less than 1.00. A mole ratio (x) of Na is preferably less than or equal to 0.2 (0 ≤ x ≤ 0.2), more preferably less than or equal to 0.15, and particularly preferably less than or equal to 0.13. The Li composite oxide can be produced by ion exchange of Na of the Na composite oxide with Li, and the entire amount of Na may be replaced with Li, and the mole ratio (x) of Na may be substantially 0. The Li composite oxide may contain a predetermined amount of Na, and the mole ratio (x) of Na may be, for example, 0.002 ≤ x ≤ 0.02.

In the compositional formula (Li₁₋ₓNaₓ)ₐM_{b}X_{1-b}O_{c}, a mole ratio (c) of O is a value satisfying electroneutrality. The mole ratio (c) of O is, i.e., a value satisfying the valence of O in the positive electrode active material. The mole ratio (c) of O is, for example, greater than or equal to 1.80 and less than or equal to 2.15 (1.80 ≤ e ≤ 2.15). Note that, when the mole ratio (c) of O is less than 2.0, oxygen in the layered rock-salt structure is deficient.

The Li composite oxide is, for example, a composite oxide represented by the compositional formula (Li₁₋ₓNaₓ)ₐNi_{1-d-e}Mn_{d}XₑO_{c}. A mole ratio (1-d-e) of Ni is preferably less than or equal to 0.95, and more preferably less than or equal to 0.85, as described above. In addition, the mole ratio (1-d-e) of Ni is preferably greater than or equal to 0.30, and more preferably greater than or equal to 0.40. An example of a preferable range of the mole ratio (1-d-e) of Ni satisfies 0.35 ≤ 1-d-e ≤ 0.95, 0.40 ≤ 1-d-e ≤ 0.85, or 0.40 ≤ 1-d-e ≤ 0.60. In this case, both increase in the capacity and material cost reduction can be achieved at a higher level.

In the compositional formula (Li₁₋ₓNaₓ)ₐNi_{1-d-e}Mn_{d}XₑO_{c}, a mole ratio (d) of Mn is preferably less than or equal to 0.75, and more preferably less than or equal to 0.65. In addition, the mole ratio (d) of Mn is preferably greater than or equal to 0.05, and more preferably greater than or equal to 0.15. An example of a preferable range of the mole ratio (b) of Mn satisfies 0.20 ≤ d ≤ 0.75, 0.25 ≤ d ≤ 0.65, or 0.40 ≤ d ≤ 0.60. In this case, both increasing the capacity and material cost reduction can be achieved at a higher level.

In the compositional formula (Li₁₋ₓNaₓ)ₐNi_{1-d-e}Mn_{d}XₑO_{c}, X may represent at least one element selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al. When X is added in a small amount, the effect of improving the charge-discharge capacity becomes more remarkable. A mole ratio (e) of X is preferably less than or equal to 0.1 (0 ≤ e ≤ 0.1), and more preferably less than or equal to 0.05 (0 ≤ e ≤ 0.05). X preferably represents at least one selected from the group consisting of Al, Co, and Zr. Among these, Al or Co is preferable.

The Li composite oxide has a volume-based median diameter (D50) of greater than or equal to 1 µm and less than or equal to 30 µm, or greater than or equal to 3 µm and less than or equal to 20 µm, for example. The D50 of the composite oxide is a particle diameter at which the volume integrated value is 50% in particle size distribution measured by a laser diffraction scattering method. A BET specific surface area of the Li composite oxide is, for example, greater than or equal to 0.1 m²/g and less than or equal to 10 m²/g, or greater than or equal to 0.5 m²/g and less than or equal to 6 m²/g. The BET specific surface area of the composite oxide is measured according to a BET method (nitrogen adsorption method) described in JIS R1626. When the D50 and the BET specific surface area are within the range, the capacity can be easily increased.

In a secondary particle cross-section of the Li composite oxide, the proportion (void ratio) of an area of the voids to an area of the particle cross-section is preferably less than or equal to 15%, more preferably less than or equal to 13%, and particularly preferably less than or equal to 11%. In this case, the capacity may be increased while keeping the durability of secondary particles. The void ratio is preferably greater than or equal to 5%, more preferably greater than or equal to 6%, and particularly preferably greater than or equal to 7%. That is, an example of a preferable range of the void ratio is greater than or equal to 5% and less than or equal to 15%.

The voids preferably have an average aspect ratio of greater than or equal to 2.1, more preferably greater than or equal to 2.3, and particularly preferably greater than or equal to 2.5. In this case, the electrolyte liquid easily penetrates smoothly through the voids into the particles, and the effect of improving the charge-discharge capacity becomes remarkable. An upper limit of the average aspect ratio is not particularly limited, and is, for example, 6.0. That is, an example of a preferable range of the average aspect ratio is greater than or equal to 2.1 and less than or equal to 6.0%.

In the secondary particle cross-section of the Li composite oxide, the number of voids is preferably greater than or equal to 300, more preferably greater than or equal to 400, and particularly preferably greater than or equal to 450. Preferably, each void is small, and a large number of small voids are formed. In the secondary particle cross-section, each void preferably has an average area of less than or equal to 0.018 µm², more preferably less than or equal to 0.016 µm², and particularly preferably less than or equal to 0.014 µm².

A lower limit of the average area of the respective voids is not particularly limited, and is, for example, greater than or equal to 0.001 µm². Each void has an average area of, for example, greater than or equal to 0.001 µm² and less than or equal to 0.018 µm², greater than or equal to 0.002 µm² and less than or equal to 0.016 µm², or greater than or equal to 0.003 µm² and less than or equal to 0.014 µm². If each void has an average area within the above range and a void ratio within the above range, the effect of improving the charge-discharge capacity becomes remarkable.

The voids include first voids having an aspect ratio of greater than or equal to 6.0 and second voids having an aspect ratio of less than 6.0, and the proportion of an area of the first voids to an area of the secondary particle cross-section is preferably greater than or equal to 0.2%, more preferably greater than or equal to 0.5%, and particularly preferably greater than or equal to 1.0%. Increasing the proportion of the first voids in the void makes the effect of improving the charge-discharge capacity remarkable. The proportion of an area of the first voids to an area of the secondary particle cross-section is, for example, greater than or equal to 0.5% and less than or equal to 3.0%, or greater than or equal to 1.0% and less than or equal to 2.0%.

The proportion of the area of voids having an aspect ratio of greater than or equal to 5.0 and the proportion of the area of voids having an aspect ratio of greater than or equal to 7.0 to the area of the secondary particle cross-section are, for example, greater than or equal to 0.2% and less than or equal to 4.0%, and greater than or equal to 0.05% and less than or equal to 1,5%, respectively. The Li composite oxide may contain voids having an aspect ratio of greater than or equal to 10. Note that the conventional positive electrode active material includes neither voids having an aspect ratio of greater than or equal to 10, typically nor voids having an aspect ratio of greater than or equal to 6.

In the secondary particle cross-section of the Li composite oxide, the proportion of the number of the first voids to the number of the voids is preferably greater than or equal to 2%, more preferably greater than or equal to 3%, and particularly preferably greater than or equal 5%. In this case, the effect of improving the charge-discharge capacity becomes remarkable. In the secondary particle cross-section, the proportion of the number of the first voids to the number of the voids is, for example, greater than or equal to 2% and less than or equal to 15%, greater than or equal to 3% and less than or equal to 13%, or greater than or equal to 5% and less than or equal to 10%.

A method of measuring the void ratio and the aspect ratio of the voids in the secondary particle cross-section of the Li composite oxide is as follows.
(1) The presence and number of voids are determined by analysis of an SEM image of a secondary particle cross-section. To expose the cross-section of the secondary particles, a focused ion beam (FIB) processing device is used to obtain a cross-section of the center (diameter) of the positive electrode active material. The particle cross-section (secondary particle cross-section) is then observed by SEM. In the present specification, the observation magnification of the SEM is 20,000 times when the particle cross-section of the Li composite oxide is observed.
(2) Image analysis software such as Image J and Avizo-Materials Science is appropriately selected to extract a void region. A low-luminance region is defined as a void based on the luminance threshold of a captured image and converted into a binarized image (see (b) of FIGS. 2 to 4), and a pixel with a continuous white portion is labeled as one void. The void ratio is determined as an area ratio of voids per 71.41 µm² obtained by cross-sectional observation, and the aspect ratio of voids is determined as major axis length/minor axis length, where the maximum Feret diameter and the minimum Feret diameter of the respective voids are respectively defined as the major axis length and the minor axis length.

A Li composite oxide is produced through (1) a step of mixing and calcinating a sodium raw material and a nickel raw material to synthesize a sodium composite oxide and (2) a step of reacting the sodium composite oxide with a lithium compound to ionexchange Na in the sodium composite oxide with Li, for example. In step (1), a manganese raw material is preferably further added, and a raw material containing an element X may be added. In the synthesis step of the Li composite oxide, synthesis conditions are controlled so that a large number of small voids having a high aspect ratio are introduced. In controlling the voids, for example, calcining conditions in step (1) are important.

At least one selected from the group consisting of metallic sodium and a sodium compound is used as the sodium raw material. The sodium compound is not particularly limited as long as it contains Na, and examples thereof include an acetate such as CH₃COONa and CH₃COONa·3H₂O, a nitrate such as NaNO₃, a sulfate such as Na₂SO₄, a carbonate such as Na₂CO₃, a bicarbonate such as NaHCO₃, a hydroxide such as NaOH, and an oxide such as Na₂O and Na₂O₂. Among these, Na₂CO₃, NaHCO₃, NaOH, and NaNO₃ are preferable.

At least one selected from the group consisting of metallic nickel and a nickel compound is used as the nickel raw material. The nickel compound is not particularly limited as long as it contains Ni, and examples thereof include an oxide such as NiO, a hydroxide such as NiOH, Ni(OH)₂, and NiOOH, a nitrate such as NiNO₃, a carbonate such NiCO₃, and Ni₄CO₃(OH)₆(H₂O)₄, and a sulfate such as NiSO₄. Among these, Ni(OH)₂ is preferable.

At least one selected from the group consisting of metallic manganese and a manganese compound is used as the manganese raw material. The manganese compound is not particularly limited as long as it contains Mn, and examples thereof include an oxide such as MnO, Mn₂O₃, Mn₃O₄, and MnO₂, a hydroxide such as Mn(OH)₂ and MnOOH, a carbonate such as MnCO₃, a nitrate such as Mn(NO₃)₂, and a sulfate such as MnSO₄. Among these, Mn(OH)₂ is preferable.

At least one selected from the group consisting of an element X and a compound of the element X is used as the raw material containing the element X. The compound containing element X is not particularly limited as long as it contains X, and examples thereof include an oxide, a hydroxide, a carbonate, a nitrate, and a sulfate. Note that a compound containing Ni or Mn, a compound containing Ni or X, a compound containing Mn or X, or a compound containing Ni, Mn, and X may be used as raw materials for the sodium composite oxide.

The mixing ratio of the raw materials for the sodium composite oxide may be appropriately set and is preferably set so as to have a chemical composition represented by the compositional formula NaₐNi_{1-d-e}Mn_{d}XₑO_{c} (wherein 0.95 ≤ a ≤ 1.05, 0.05 < d ≤ 0.65, 0 ≤ e ≤ 0.05, and 0.4 ≤ 1-d-e < 0.95 are satisfied, and c is a value satisfying electroneutrality), for example. A method of mixing the raw materials is not particularly limited as long as the raw materials are uniformly mixed, for example, mixing using a known mixing machine such as a mixer can be used to mix.

The mixture of the raw materials is calcined in the atmosphere or in an oxygen stream using a calcining furnace. The calcining temperature is preferably greater than or equal to 700°C and less than or equal to 900°C, and more preferably greater than or equal to 750°C and less than or equal to 850°C. The temperature rising rate is preferably slow, for example, greater than or equal to 0.3°C/min and less than or equal to 3.0°C/min, or greater than or equal to 0.5°C/min and less than or equal to 2.0°C/min. The calcining time is preferably greater than or equal to 20 hours when the calcining temperature is greater than or equal to 750°C and less than or equal to 850°C. Herein, the calcining time means the time from when the temperature of the calcining furnace reaches the calcining temperature above until the calcination is completed and cooling starts. The calcined product is rapidly cooled in the atmosphere by being removed from the calcining furnace.

A large number of small thin line-shaped voids having a high aspect ratio may be introduced into the particles of the Li composite oxide finally obtained by increasing the calcining time in step (1). As described above, the void ratio is preferably less than or equal to 15%, the voids preferably have an aspect ratio of greater than or equal to 2.5, and the proportion of the first voids is preferably greater than or equal to 1.0%. When each of them is controlled within the above range, the calcining time is preferably greater than or equal to 20 hours and less than or equal to 40 hours, or greater than or equal to 22 hours and less than or equal to 28 hours, at a calcining temperature of greater than or equal to 750°C and less than or equal to 850°C. The sodium composite oxide is obtained, for example, by rapidly cooling the calcined product in the atmosphere, followed by pulverization by a known method.

In step (2), Na in the sodium composite oxide is ion-exchanged with Li. In step (2), for example, the entire amount of Na is ion-exchanged with Li, but the ion exchange may be performed so that a predetermined amount of Na remains. A preferable method of the ion exchange includes a method including adding a molten salt bed of a lithium salt to a sodium composite oxide and heating the mixture. For example, at least one selected from the group consisting of lithium nitrate, lithium sulfate, lithium chloride, lithium carbonate, lithium hydroxide, lithium iodide, and lithium bromide is used as the lithium salt.

The heating temperature in the ion exchange step is preferably greater than or equal to 200°C and less than or equal to 400°C, and more preferably greater than or equal to 250°C and less than or equal to 350°C. When the heating temperature exceeds 400°C, the reaction may proceed rapidly, causing a non-uniform reaction. On the other hand, when the heating temperature falls below 200°C, the reaction does not sufficiently proceed, and Na tends to remain in excess. The heating treatment time is set to, for example, greater than or equal to 3 hours and less than or equal to 10 hours after the temperature is increased at a temperature rising rate of greater than or equal to 3.0°C/min and less than or equal to 8.0°C/min to reach the maximum treatment temperature. Cooling is performed after the heat treatment to obtain a Li composite oxide. The product may be washed with water, ethanol, methanol, or the like. The drying after washing is carried out in an atmosphere or vacuum.

### [Negative Electrode]

The negative electrode 12 has a negative electrode core and a negative electrode mixture layer disposed on the negative electrode core. For the negative electrode core, a foil of a metal stable within a potential range of the negative electrode 12, such as copper, a copper alloy, stainless steel, nickel, and a nickel alloy, a film in which such a metal is disposed on a surface thereof, and the like may be used. The negative electrode mixture layer includes a negative electrode active material and a binder, and is preferably provided on both surfaces of the negative electrode core. The negative electrode 12 may be produced by, for example, applying a negative electrode mixture slurry including the negative electrode active material and the binder on the negative electrode core, and drying and subsequently compressing the coating film to form the negative electrode mixture layer on both the surfaces of the negative electrode core. The negative electrode mixture layer may include a conductive agent such as CNT.

For the negative electrode active material, a carbon material that reversibly occludes and releases lithium ions is typically used. For the negative electrode active material, an element that forms an alloy with Li, such as Si and Sn, a material containing such an element, and the like may be used. Among these, a silicon-containing material containing Si is preferable. As the negative electrode active material, lithium titanate, which has a higher potential of charge and discharge relative to metal lithium than that of the carbon material and the like, may also be used. The negative electrode active materials may be used singly, or in combination thereof.

The carbon material to function as the negative electrode active material is, for example, at least one selected from the group consisting of natural graphite, artificial graphite, soft carbon, and hard carbon. Among these, artificial graphite such as massive artificial graphite (MAG) and graphitized mesophase-carbon microbead (MCMB), natural graphite such as flake graphite, massive graphite, and amorphous graphite, or a mixture thereof are preferably used. Examples of the silicon-containing material to function as the negative electrode active material include a silicon alloy, a silicon compound, and a composite material containing Si. A preferable silicon-containing material is of composite particles including an ion-conductive phase and Si phases dispersed in the ion-conductive phase.

For the binder included in the negative electrode mixture layer, a fluororesin, an olefin resin, PAN, a polyimide, a polyamide, an acrylic resin, and the like may be used as in the case of the positive electrode 11, and polyvinyl acetate, styrene-butadiene rubber (SBR), and the like may be used. Among these, SBR is preferably used. The binders may be used singly, or in combination thereof. The negative electrode mixture layer preferably includes CMC or a salt thereof, polyacrylic acid (PAA) or a salt thereof, polyvinyl alcohol (PVA), or the like. These materials function as a thickener in the negative electrode mixture slurry. A content rate of the binder is, for example, greater than or equal to 0.1 mass% and less than or equal to 5 mass% relative to the mass of the negative electrode mixture layer.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin may be formed.

On a boundary between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

### EXAMPLES

Hereinafter, the present disclosure will be further described with Examples, but the present disclosure is not limited to these Examples.

### <Example 1>

### [Production of Positive Electrode Active Material]

A hydroxide containing Ni and Mn at a mole ratio of 1:1 and sodium carbonate were mixed at a mole ratio of Ni:Mn:Na = 0.5:0.5:1.05, and the obtained mixture was heated at a temperature rising rate of 1°C/min, calcined in air at 800°C for 24 hours, and then rapidly cooled in air to obtain a Na-containing composite oxide. Lithium nitrate and lithium chloride were mixed at a mole ratio of 88:12 to prepare a Li-containing molten salt. A Li-containing molten salt and a Na-containing composite oxide were mixed, and the obtained mixture was heated at a temperature rising rate of 5°C/min and heated in air at 280°C for 5 hours. Thereafter, the product was cooled at a temperature falling rate of 2°C/min and washed with a sufficient amount of water, followed by heat treatment in a vacuum at 160°C for 4 hours to obtain a Li composite oxide in which Na was ion-exchanged with Li.

The obtained Li composite oxide was subjected to composition analysis using an ICP optical emission spectrometer (iCAP6300, manufactured by Thermo Fisher Scientific Inc.), and as a result, the composition was Li_{0.932}Na_{0.01}Ni_{0.5}Mn_{0.5}O_{0.185}. As a result of SEM observation of the Li composite oxide, it was confirmed that the Li composite oxide was formed of secondary particles each formed by aggregation of primary particles. In addition, the particle cross-section of Li composite oxide was produced, and as a result of SEM observation of the particle cross-section, a large number of elongated voids were confirmed inside the particles. The proportion of the voids, aspect ratio, and the like were determined by the above method. Table 1 shows these values (the same applies to other Examples and Comparative Examples). Note that 949 voids were confirmed in the secondary particle cross-section observed.

### [Production of Positive Electrode]

For the positive electrode active material, the Li composite oxide was used. The positive electrode active material, acetylene black, and polyvinylidene fluoride were mixed at a solid mass ratio of 92:5:3, and N-methyl-2-pyrrolidone (NMP) was used as a dispersion medium to prepare a positive electrode mixture slurry. The positive electrode slurry was applied to a positive electrode core composed of an aluminum foil, and the coating film was dried and then rolled by a rolling roller to obtain a positive electrode in which a positive electrode mixture layer was formed on the positive electrode core.

### [Preparation of Non-Aqueous Electrolyte Liquid]

Lithium hexafluorophosphate (LiPF₆) was dissolved in a mixed solvent of fluoroethylene carbonate (FEC) and methyl propionate (FMP) at a volume ratio of 1:3 so that the concentration was 1 mol/liter to prepare a non-aqueous electrolyte liquid.

### [Production of Test Cell]

For the negative electrode, a lithium metal foil was used. The positive electrode and the negative electrode were disposed to face each other with a separator interposed therebetween to form an electrode assembly. The electrode assembly and the non-aqueous electrolyte liquid were housed in a coin-shaped exterior housing can, and an opening portion of the exterior housing can was sealed with a gasket and a sealing assembly to prepare a test cell (non-aqueous electrolyte secondary battery).

### <Example 2>

A positive electrode active material and a test cell were produced in the same manner as in Example 1 except that a Na-containing composite oxide synthesized in the same manner as in Example 1 was mixed with lithium hydroxide, and the obtaining mixture was heated at a temperature rising rate of 5°C/min, heated in air at 280°C for 5 hours, and then cooled at a temperature falling rate of 2°C/min to obtain a Li composite oxide (positive electrode active material). The obtained Li composite oxide was subjected to composition analysis using an ICP optical emission spectrometer (iCAP6300, manufactured by Thermo Fisher Scientific Inc.), and as a result, the composition was Li_{0.843}Na_{0.12}Ni_{0.5}Mn_{0.5}O_{0.193}. Note that 493 voids were confirmed in the secondary particle cross-section of the positive electrode active material observed.

### <Comparative Example 1>

A hydroxide containing Ni and Mn at a mole ratio of 1:1 and lithium hydroxide were mixed at a mole ratio of Ni: Mn: Li = 0.5:0.5:1.05, and the obtained mixture was heated at a temperature rising rate of 5°C/min, calcined in air at 900°C for 10 hours, and then cooled at a temperature falling rate of 10°C/min to obtain a lithium-transition metal composite oxide. A test cell was produced in the same manner as in Example 1 except that this composite oxide was used for the positive electrode active material. Note that 269 voids were confirmed in the secondary particle cross-section of the positive electrode active material observed.

### [Evaluation of Discharge Capacity]

Each of the test cells of Examples and Comparative Examples was charged at a constant current of 0.2 C until the battery voltage reached 4.5 V under a condition of 25°C, and then charged at a constant voltage of 4.5 V until the current value reached 0.02 C. The test cells were rested for 20 minutes and then discharged at a constant current of 0.2 C until the battery voltage reached 2.5 V to determine discharge capacities. Table 1 shows the measurement results of the discharge capacity together with the composition of the positive electrode active material.

**[Table 1]**

| | Positive electrode active material | | | | | Discharge capacity mAh/g |
|---|---|---|---|---|---|---|
| | Proportion of void area | Average aspect ratio of void | Average size of void | Proportion of number of first void | Proportion of first void area | |
| Example 1 | 10.4% | 2.801 | 0.0079µm² | 6.6% | 1.2% | 211.7 |
| Example 2 | 8.0% | 2.689 | 0.0116µm² | 6.5% | 1.3% | 209.1 |
| Comparative Example 1 | 7.1% | 2.037 | 0.0189µm² | 1.8% | 0.1% | 180.1 |

As shown in Table 1, the test cells of Examples all had a higher capacity than the test cells of Comparative Examples. As described above, FIG. 2 and FIG. 3 are particle sectional images of the positive electrode active materials of Examples 1 and 2, and FIG. 4 is a particle sectional image of the positive electrode active material of Comparative Example 1. As is clear from these particle sectional images, a large number of voids having a high aspect ratio are formed in the positive electrode active materials of Examples as compared with the positive electrode active materials of Comparative Examples. Each of the voids of the positive electrode active materials of Examples is small and is evenly formed in a striped pattern throughout the particles. The use of the positive electrode active materials in which such voids are introduced into the particles significantly can improve the charge-discharge capacity of the battery.

In the positive electrode active material of Example 1, the proportion of an area of voids having an aspect ratio of greater than or equal to 5 and greater than or equal to 7 to an area of the secondary particle cross-section was 1.9% and 0.9%, respectively. In the positive electrode active material of Example 2, the proportion of an area of voids having an aspect ratio of greater than or equal to 5 and greater than or equal to 7 to an area of the secondary particle cross-section was 1.8% and 0.7%, respectively. On the other hand, in the positive electrode active material of Comparative Example 1, the proportion of an area of voids having an aspect ratio of greater than or equal to 5 and greater than or equal to 7 to an area of the secondary particle cross-section was 0.2% and 0%, respectively.

The present disclosure will be further described with the following embodiments.

Constitution 1: A positive electrode active material for a non-aqueous electrolyte secondary battery, the positive electrode active material having a crystal structure belonging to a space group R-3m, and being constituted by secondary particles each formed by aggregation of primary particles, wherein
the secondary particles include voids, and
in a particle cross-section of the secondary particles, a proportion of an area of the voids to an area of the particle cross-section is less than or equal to 15%, and the voids have an average aspect ratio of greater than or equal to 2.1.

Constitution 2: A positive electrode active material for a non-aqueous electrolyte secondary battery, the positive electrode active material having a crystal structure belonging to the space group R-3m, and being constituted by secondary particles each formed by aggregation of primary particles, wherein
the secondary particles include voids,
the voids include first voids having an aspect ratio of greater than or equal to 6.0 and second voids having an aspect ratio of less than 6.0, and
in a particle cross-section of the secondary particles, each void has an average area of less than or equal to 0.018 µm², and a proportion of an area of the first voids to an area of the particle cross-section is greater than or equal to 0.2%.

Constitution 3: The positive electrode active material for a non-aqueous electrolyte secondary battery according to Constitution 2, wherein in a particle cross-section of the secondary particles, a proportion of the number of the first voids to the number of the voids is greater than or equal to 2% and less than or equal to 15%.

Constitution 4: The positive electrode active material for a non-aqueous electrolyte secondary battery according to any one of Constitutions 1 to 3, wherein in a particle cross-section of the secondary particles, the voids have an average aspect ratio of greater than or equal to 2.1 and less than or equal to 6.0.

Constitution 5: The positive electrode active material for a non-aqueous electrolyte secondary battery according to any one of Constitutions 1 to 4, wherein in a particle cross-section of the secondary particles, the number of the voids is greater than or equal to 300.

Constitution 6: The positive electrode active material for a non-aqueous electrolyte secondary battery according to any one of Constitutions 1 to 5, wherein the positive electrode active material is constituted by a composite oxide represented by a compositional formula (Li₁₋ₓNaₓ)ₐM_{b}X_{1-b}O_{c}, wherein M represents at least one selected from the group consisting of Ni, Co, Mn, and Al; X represents at least one selected from the group consisting of transition metal elements and main-group elements other than Li, Na, Ni, Co, Mn, and Al; 0 ≤ x ≤ 0.2, 0.90 ≤ a ≤ 1.15, and 0 < b ≤ 1 are satisfied; and c is a value satisfying electroneutrality.

Constitution 7: A non-aqueous electrolyte secondary battery, comprising: a positive electrode including the positive electrode active material according to any one of Constitutions 1 to 6; a negative electrode; and a non-aqueous electrolyte.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

## Claims

1. A positive electrode active material for a non-aqueous electrolyte secondary battery, the positive electrode active material having a crystal structure belonging to a space group R-3m, and being constituted by secondary particles each formed by aggregation of primary particles, wherein
the secondary particles include voids, and
in a particle cross-section of the secondary particles, a proportion of an area of the voids to an area of the particle cross-section is less than or equal to 15%, and the voids have an average aspect ratio of greater than or equal to 2.1.

2. A positive electrode active material for a non-aqueous electrolyte secondary battery, the positive electrode active material having a crystal structure belonging to a space group R-3m, and being constituted by secondary particles each formed by aggregation of primary particles, wherein
the secondary particles include voids,
the voids include first voids having an aspect ratio of greater than or equal to 6.0 and second voids having an aspect ratio of less than 6.0, and
in a particle cross-section of the secondary particles, each void has an average area of less than or equal to 0.018 µm², and a proportion of an area of the first voids to an area of the particle cross-section is greater than or equal to 0.2%.

3. The positive electrode active material for a non-aqueous electrolyte secondary battery according to claim 2, wherein in a particle cross-section of the secondary particles, a proportion of the number of the first voids to the number of the voids is greater than or equal to 2% and less than or equal to 15%.

4. The positive electrode active material for a non-aqueous electrolyte secondary battery according to claim 1 or 2, wherein in a particle cross-section of the secondary particles, the voids have an average aspect ratio of greater than or equal to 2.1 and less than or equal to 6.0.

5. The positive electrode active material for a non-aqueous electrolyte secondary battery according to claim 1 or 2, wherein in a particle cross-section of the secondary particles, the number of the voids is greater than or equal to 300.

6. The positive electrode active material for a non-aqueous electrolyte secondary battery according to claim 1 or 2, wherein the positive electrode active material is constituted by a composite oxide represented by a compositional formula (Li₁₋ₓNaₓ)ₐM_{b}X_{1-b}O_{c},
wherein M represents at least one selected from the group consisting of Ni, Co, Mn, and Al; X represents at least one selected from the group consisting of transition metal elements and main-group elements other than Li, Na, Ni, Co, Mn, and Al; 0 ≤ x ≤ 0.2, 0.90 ≤ a ≤ 1.15, and 0 < b ≤ 1 are satisfied; and c is a value satisfying electroneutrality.

7. A non-aqueous electrolyte secondary battery, comprising:
a positive electrode including the positive electrode active material according claim 1 or 2;
a negative electrode; and
a non-aqueous electrolyte.
